# EUROPEAN PATENT SPECIFICATION

(11) **EP 3 617 032 B1**
(45) Date of publication and mention of the grant of the patent: **10.04.2024**
(21) Application number: 17935390.9
(22) Date of filing: 28.12.2017
(51) Int. Cl.: B61L 15/00, G05B 19/04, G06F 11/20, B61C 17/00, G06F 11/16

(54) **METHOD AND SYSTEM FOR ALTERNATINGLY ACTIVATING TWO CONTROL UNITS OF TRAIN, AND TRAIN**
VERFAHREN UND SYSTEM ZUR WECHSELNDEN AKTIVIERUNG ZWEIER STEUEREINHEITEN EINES ZUGES UND ZUG
PROCÉDÉ ET SYSTÈME D'ACTIVATION ALTERNÉE DE DEUX UNITÉS DE COMMANDE DE TRAIN, ET TRAIN

(30) Priority: 20.12.2017 CN 201711387429
(43) Date of publication of application: 04.03.2020
(73) Proprietor: CRRC Changchun Railway Vehicles Co., Ltd., Changchun, Jilin 130000 (CN)
(72) Inventor: LIU, Changqing, Jilin 130000 (CN); LI, Hailong, Jilin 130000 (CN)
(74) Representative: Thoma, Michael
(86) International application number: PCT/CN2017/119178
(87) International publication number: WO 2019/119492

(56) References cited:
- CN-A- 1 692 337
- CN-A- 101 902 069
- CN-A- 103 389 668
- CN-A- 107 135 102
- CN-A- 107 187 465
- CN-A- 107 264 572
- CN-A- 107 264 572
- CN-U- 203 930 399
- DE-A1- 3 013 061
- US-A1- 2006 271 810
- US-A1- 2010 198 991

## Description

The present application claims priority to Chinese Patent Application No. CN201711387429.0, titled "METHOD AND SYSTEM FOR ALTERNATING BETWEEN TWO CONTROL UNITS OF TRAIN, AND TRAIN", filed on December 20, 2017 with the Chinese patent office.

### FIELD

The present disclosure relates to the technical field of using train control units, and in particular to a method and a system for alternating between two control units of a train, and a train.

### BACKGROUND

With the continuous development in the field of motor trains and high-speed trains, there are more and more passengers to take the motor train and the high-speed train and the running shift of the train increases, since people pursue more convenient, faster, more comfortable and safer travel modes. Therefore, a researching focus for those skilled in the art is how to make an improvement to solve the potential security risks.

Various devices in a train such as a high-speed train or a motor train are controlled by a train control unit. In consider of that all the devices cannot function in a case where the only train control unit is in a fault state, a standby train control unit is added. In the conventional technology, the standby train control unit is started only when an abnormality occurs in the main control unit. Since a fault rarely occurs in the main control unit, it is unnecessary to start the standby control unit in a long time period, and it is not considered whether the standby control unit functions well during the long time period. Furthermore, using of the same control unit for a long time period results in accelerated aging of hardware, and a fault may occur in a control unit unused for a long time period. If both control units cannot be started, a series of consequences such as cancellation of an original scheduled travel of the train and delay in passenger travels may be caused.

Patent application No. CN107264572A discloses a contactless logic control system with the hot-redundant capacity. The system comprises a logic control unit set A and a logic control unit set B. After the control system is started, the control system conducts date odd or even number judgment according to clock information; if the date is an odd number, the set A automatically enters a working set mode, and the set B enters a hot standby set mode; and if the date is an even number, the set B enters the working set mode, and the set A enters the hot standby set mode. The technical problem that the service life of a working set can be shortened through an existing cold stand-by redundancy method is solved, reasonable design of the control system is achieved, the two logic control unit sets are alternately used, and therefore the technical effect that the service life of the working set is prolonged is achieved.

Therefore, an issue to be solved urgently by those skilled in the art is how to provide a more reasonable control unit alternation mechanism in a case where two control units are provided, such that the control units have a longer service life, and abnormities can be detected in time.

### SUMMARY

An object of the present disclosure is to provide a method for alternating between two control units of a train. With the method, the two control units are started alternately each time the train is powered on and started, such that the two control units can be used alternately, thereby ensuring a balanced use, finding a control unit in a fault state in time, significantly improving a service life of the control unit, reducing a probability of faults in a standby control unit due to being unused for a long time, and thus improving safety of the train.

Another object of the present disclosure is to provide a system for alternating between two control units of a train, and a train provided with the control units to which the above-described method is applied.
In order to achieve the above objects, the present invention provides for a method as defined by claim 1 and a system as defined by claim 4, wherein preferred embodiments of the invention are laid down in the dependent claims.

With the method for alternating between two control units of the train provided according to the present disclosure, power-on identification numbers of a first control unit and a second control unit are recorded, the first control unit is a control unit started in a case that the power-on identification numbers are odd, and the second control unit is a control unit started in a case that the power-on identification numbers are even. A first power-on identification number of the first control unit and a second power-on identification number of the second control unit are acquired when the train is started. It is determined whether the first power-on identification number is equal to the second power-on identification number. An odd number is added to both the first power-on identification number and the second power-on identification number if the first power-on identification number is equal to the second power-on identification number to obtain new power-on identification numbers, and a corresponding control unit is started based on parity of the new power-on identification numbers.

Apparently, with the technical solutions provided according to the present disclosure, the two control units are started alternately each time the train is powered on and started, such that the two control units can be used alternately, thereby ensuring a balanced use, finding a control unit in a fault state in time, significantly improving a service life of the control unit, reducing a probability of faults in a standby control unit due to being unused for a long time, and thus improving safety of the train. A system for alternating between two control units of a train, and a train provided with control units to which the method is applied are further provided according to the present disclosure, which can achieve the above beneficial effects and the beneficial effects are not described herein.

### BRIEF DESCRIPTION OF THE DRAWINGS

Figure 1 is a flowchart of a method for alternating between two control units of a train according to an embodiment of the present disclosure;
Figure 2 is a flowchart of a method for alternating between two control units of a train according to another embodiment of the present disclosure;
Figure 3 is a flowchart of a method for alternating between two control units of a train according to still another embodiment of the present disclosure;
Figure 4 is a schematic diagram showing a connection between control units of a train according to an embodiment of the present disclosure; and
Figure 5 is a structural block diagram of a system for alternating between two control units of a train according to an embodiment of the present disclosure.

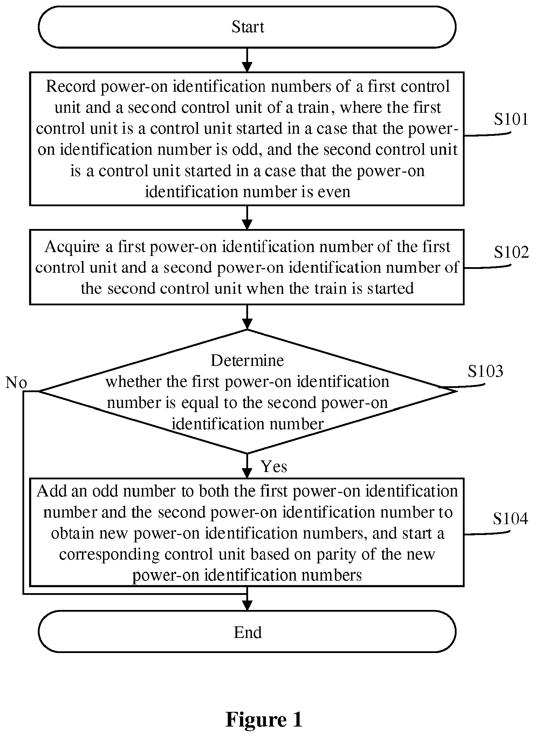

Figures 1, 4 and 5 are no embodiment of the invention with all features thereof, but show only some of the features of the invention.

### DETAILED DESCRIPTION OF EMBODIMENTS

The technical solutions in the embodiments of the present disclosure are described clearly and completely in conjunction with the accompanying drawings in the embodiments of the present disclosure hereinafter. It is apparent that the below-described embodiments are merely some rather than all of embodiments of the present disclosure.

A method and a system for alternating between two control units of a train, and a train are provided according to the present disclosure. The two control units are started alternately each time the train is powered on and started, such that the two control units can be used alternately, thereby ensuring a balanced use, finding a control unit in a fault state in time, significantly improving a service life of the control unit, reducing a probability of faults in a standby control unit due to being unused for a long time, and thus improving safety of the train.

In order to make the objects, features and advantages of embodiments of the present disclosure clearer, the technical solutions in the embodiments of the present disclosure are described clearly and completely in conjunction with the accompanying drawings in the embodiments of the present disclosure hereinafter. It is apparent that the below-described embodiments are merely some rather than all of embodiments of the present disclosure.

Reference is made to Figure 1, which is a flowchart of a method for alternating between two control units of a train according to an embodiment of the present disclosure. The method includes the following steps S101 to S 104.

In step S101, power-on identification numbers of a first control unit and a second control unit of a train are recorded. The first control unit is s a control unit started in a case that the power-on identification numbers are odd, and the second control unit is a control unit started in a case that the power-on identification numbers are even.

Step S101 is intended to record the power-on identification numbers of the two control units of the train. It is configured that one control unit is started in a case that the power-on identification numbers are odd, and the other control unit is started in a case that the power-on identification numbers are even. The reason why it is determined based on unified power-on identification numbers is that the power-on identification numbers of the two control units are equal to each other by default in this embodiment.

Practically, 1 may be added to a power-on identification number of a started control unit to cause a difference between the two power-on identification numbers. In this case, a control unit with a smaller power-on identification number is started next time, such that the difference is eliminated. In the case where the two power-on identification numbers are equal to each other, another determination mechanism, as an alternation method, may be introduced to determine a control unit to be started next time.

Further, in order to overcome the disadvantage that a determination mechanism is required to be introduced in a case that there is a difference between the power-on identification numbers, a control unit with a smaller power-on identification number may be started in a case where the difference is 1, and 2 is added to the smaller power-on identification number in each start, such that the difference is still 1 and a power-on identification number of another control unit is smaller. Therefore, it can be determined simply and easily which control unit is to be started based on the power-on identification numbers according to a rule of starting a control unit with a smaller power-on identification number.

However, the above situations are based on the fact that the deference between the power-on identification numbers of the two control units is not large. The reason resulting in a large difference may be that: a control unit in the train is damaged and fails to work, and another control unit, which may be new or may be removed from other trains, is used to replace the control unit in a fault state. A power-on identification number of the newly installed control unit may be significantly greater or smaller than that of a remaining control unit in the train with a great probability regardless of a source of the newly installed control unit. In a case where a difference between the two power-on identification numbers is large, it is difficult to follow the above-described alternation start mode and an additional solution is required, which is described in detail in subsequent steps.

In step S102, a first power-on identification number of the first control unit and a second power-on identification number of the second control unit are acquired when the train is started.

Based on step S101, step S102 is intended to acquire power-on identification numbers of the first control unit and the second control unit, that is, the first power-on identification number and the second power-on identification number.

The first power-on identification number and the second power-on identification number may be acquired in various ways, for example, through a multifunction vehicle bus (MVB), or using an appropriate acquisition means according to a setting habit of a train manufacturer, which are not specifically limited herein, and a most appropriate way is selected according to specific circumstances.

In step S103, it is determined whether the first power-on identification number is equal to the second power-on identification number.

Based on step S102, step S103 is intended to determine whether the two power-on identification numbers are equal to each other. Since a case that a fault occurs and replacement is to be performed rarely occurs, the two power-on identification numbers should be equal to each other under normal conditions according to the determination rule in this embodiment and content described in step S101.

In step S104, an odd number is added to both the first power-on identification number and the second power-on identification number to obtain new power-on identification numbers, and a corresponding control unit is started based on parity of the new power-on identification numbers.

Step S104 is based on the determination result in S103 that the first power-on identification number is equal to the second power-on identification number, the odd number is added to the same power-on identification numbers to obtain new power-on identification numbers, and a corresponding control unit is started based on parity of the new power-on identification numbers.

The reason for adding the odd number is that: if an odd number is consecutively added to a number twice, an odd number and an even number are acquired respectively. For example, if the odd number is 1, 1 plus 1 equals 2, 2 plus 1 equals 3. Therefore, an even number 2 and an odd number 3 are acquired respectively. In this way, it can be determined which control unit is to be started based on parity of the new power-on identification numbers obtained through the odd number adding operation. Practically, the odd number to be added may also be 3, 5, 7 and the like. The odd number is generally not set to be too large, thus 1 is the most commonly used.

The determination rule is initially set in step S101. It is apparent that each of the two control units can be defined as the first control unit, this is only a way to distinguish the two control units from each other, and the two control units may be named according to actual naming conventions.

Based on definition in step S101, the first control unit is a control unit started in a case that the power-on identification numbers are odd, and the second control unit is a control unit started in a case that the power-on identification numbers are even. In a case that the two power-on identification numbers are both 28 and the addend is an odd number 1, 1 is added to the power-on identification numbers to obtain new power-on identification numbers 29, which is an odd number. Based on the definition in step S101, the first control unit is started to control various executing devices in the train. In the next start, 1 is added to 29 to obtain new power-on identification numbers 30, which is an even number. Based on the definition in step S101, the second control unit is started to control various executing devices in the train. The above process is repeated, and the two control units can be used alternately without replacing any control unit.

The benefits of alternation are apparent, which includes: first, the two control units are used alternately, it can be found whether a control unit to be started is in a fault state in time. Since one of the control units is used in a last start, a case that the two control units are both damaged rarely occurs in this start and is almost negligible if a fault occurs; and second, the alternation between the two control units causes the two control units to be in a good operation state, thereby effectively prolonging service lives of the two control units.

An alternation scheme without replacing a control unit in a normal situation is illustrated in the embodiment. In an actual operation, it is inevitable that a device is in a fault state due to various reasons and is required to be replaced. In the following embodiments, corresponding solutions are given for a case where the power-on identification numbers are not equal to each other due to a replacement.

Based on the above technical solution, a method for alternating between two control units of a train is provided according to the embodiment of the present disclosure. With the method, the two control units are started alternately each time a train is powered on and started, such that the two control units can be used alternately, thereby ensuring a balanced use, finding a control unit in a fault state in time, significantly improving a service life of the control unit, reducing a probability of faults in a standby control unit due to being unused for a long time, and thus improving safety of the train.

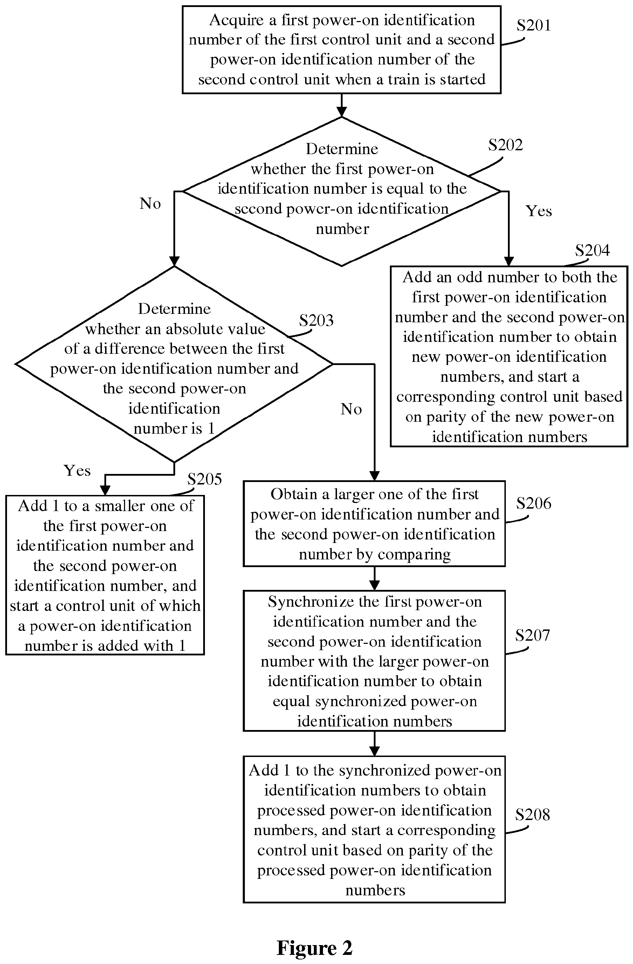

Reference is made to Figure 2, which is a flowchart of a method for alternating between two control units of a train according to another embodiment of the present disclosure.

This embodiment makes a supplemental explanation for other cases which may occur after the determination in step S103 in the above-described embodiment. The other steps are substantially the same as those in the foregoing embodiment, and for similar parts, reference may be made to relevant description in the foregoing embodiment, and details are not described herein. The method includes the following steps S201 to S208.

In step S201, a first power-on identification number of the first control unit and a second power-on identification number of the second control unit are acquired when a train is started.

In step S202, it is determined whether the first power-on identification number is equal to the second power-on identification number.

In step S203, it is determined whether an absolute value of a difference between the first power-on identification number and the second power-on identification number is 1.

Step S203 is based on the determination result in step S202 that the first power-on identification number is not equal to the second power-on identification number, and step S203 is intended to determine the difference between the two power-on identification numbers.

As considered in step S101, a power-on identification number of a newly installed control unit is certainly unequal to the power-on identification number of the remaining control unit and the difference between the two power-on identification numbers is undetermined. According to the rule of starting a control unit with a smaller power-on identification number and increasing the smaller power-on identification number, the newly installed control unit may be started successively for many times, thereby resulting in deviation from the alternation mechanism.

In step S204, an odd number is added to both the first power-on identification number and the second power-on identification number to obtain new power-on identification numbers, and a corresponding control unit is started based on parity of the new power-on identification numbers.

Step S204 is the same as step S104. For related description, reference may be made to step S104, and details are not described herein.

In step S205, 1 is added to a smaller power-on identification number, and a control unit of which the power-on identification number is added with 1 is started.

Step S205 is based on the determination result in step S203 that the absolute value of the difference is 1, and is intended to process with the small difference to cause the power-on identification numbers of the two control units to be equal to each other quickly, so that the alternation operation can be performed based on the normal alternation mechanism when the two power-on identification numbers are equal to each other.

Practically, the power-on identification number of the newly installed control unit is smaller or larger than the power-on identification number of the remaining control unit in the train by 1, it is possible that a control unit started this time may be also started last time based on the rule in which a control unit with a smaller power-on identification number is started. However, this case occurs only once and a normal alternation is performed subsequently.

In step S206, a larger power-on identification number of the first power-on identification number and the second power-on identification number is obtained by comparing.

Step S206 is based on the determination result in S203 that the absolute value of the difference is not 1, and is intended to obtain a larger power-on identification number of the first power-on identification number and the second power-on identification number by comparing in a case that the absolute value of the difference is relatively large. Step S206 is intended to use the larger power-on identification number as a creditable power-on identification number for subsequent processing.

Instead of the larger power-on identification number, the smaller power-on identification number is set to be creditable or an average of the two power-on identification numbers is calculated as a creditable power-on identification number, which is not specifically limited herein, and the creditable power-on identification number may be determined according to actual situations, setting habits or special requirements.

In step S207, the first power-on identification number and the second power-on identification number are synchronized with the larger power-on identification number to obtain equal synchronized power-on identification numbers.

Based on step S206, step S207 is intended to synchronize the original first power-on identification number and the original second power-on identification number with the obtained larger power-on identification number to obtain equal synchronized power-on identification numbers. It may be understood that the new power-on identification numbers overwrite the original power-on identification numbers.

In step S208, 1 is added to the synchronized power-on identification numbers to obtain processed power-on identification numbers, and a corresponding control unit is started based on the parity of the processed power-on identification numbers.

Based on step S207, since the synchronization processing is performed to obtain equal synchronized power-on identification numbers, determination may be made using the equal synchronized power-on identification numbers based on the normal alternation mechanism.

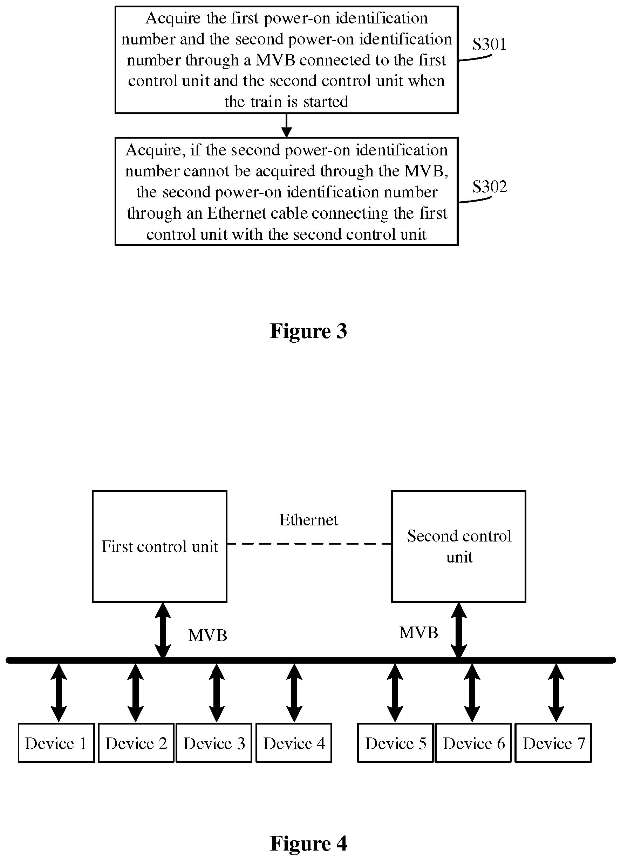

Reference is made to Figure 3, which is a flowchart of a method for alternating between two control units of a train according to another embodiment of the present disclosure.

In this embodiment, illustration is performed on how to obtain the first power-on identification number and the second power-on identification number in step S102 in the above-described embodiment. The other steps are substantially the same as those in the above-described embodiment. For the same parts, one may refer to the related description in the above-described embodiment, and it is not described herein. The embodiment includes the following steps S301 to S302.

In step S301, the first power-on identification number and the second power-on identification number are acquired through a MVB connected to the first control unit and the second control unit.

This step is intended to illustrate how to acquire the first power-on identification number and the second power-on identification number. In step S301, the power-on identification numbers are acquired through the MVB connecting the control units with various executing devices in the train.

In step S302, if the second power-on identification number cannot be acquired through the MVB by the first control unit, the second power-on identification number is acquired through an Ethernet cable connecting the first control unit with the second control unit.

Step S302 is based on the fact that the power-on identification number cannot be acquired through the MVB in step S301. Step S302 is performed to perform communication between two control units through the Ethernet cable connecting the two control units. Since the MVB in the train is rarely damaged, a reason for the power-on identification number being not acquired through the MVB is more likely that the control unit is not powered on and started normally. Even if the MVB is damaged, the power-on identification number can also be acquired through the Ethernet cable and then transmitted over a content network of the train.

For the above connection relationship, reference may be made to Figure 4, which is a schematic diagram showing a connection between control units of a train according to an embodiment of the present disclosure.

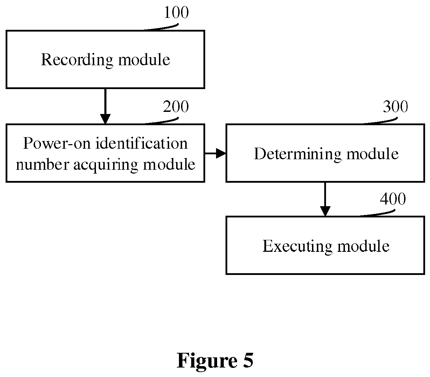

Reference is made to Figure 5, which is a structural block diagram of a system for alternating between two control units of a train according to an embodiment of the present disclosure. The alternation system includes: a recording module 100, a power-on identification number acquiring module 200, a determining module 300 and an executing module 400.

The recording module 100 is configured to record power-on identification numbers of a first control unit and a second control unit of a train. The first control unit is a control unit started in a case that the power-on identification numbers are odd, and the second control unit is a control unit started in a case that the power-on identification numbers are even.

The power-on identification number acquiring module 200 is configured to acquire a first power-on identification number of the first control unit and a second power-on identification number of the second control unit when the train is started.

The determining module 300 is configured to determine whether the first power-on identification number is equal to the second power-on identification number.

The executing module 400 is configured to add, if the first power-on identification number is equal to the second power-on identification number, an odd number to both the first power-on identification number and the second power-on identification number to obtain new power-on identification numbers, and start a corresponding control unit based on parity of the new power-on identification numbers.

Further, the system further includes: a difference determining module and a processing module.

The difference determining module is configured to determine, if the first power-on identification number is not equal to the second power-on identification number, whether an absolute value of a difference between the first power-on identification number and the second power-on identification number is 1.

The processing module is configured to add, if the absolute value of the difference is 1, 1 to a smaller power-on identification number of the first power-on identification number and the second power-on identification number, and start a control unit of which the power-on identification number is added with 1.

Further, the system further includes: a larger number acquiring module, a number synchronizing module, an adding module and a start controlling module.

The larger number acquiring module is configured to obtain, if the absolute value of the difference is not 1, a larger power-on identification number of the first power-on identification number and the second power-on identification number by comparing.

The number synchronizing module is configured to synchronize the first power-on identification number and the second power-on identification number with the larger power-on identification number to obtain equal synchronized power-on identification numbers.

The adding module is configured to add 1 to the synchronized power-on identification numbers to obtain processed power-on identification numbers.

The start controlling module is configured to start a corresponding control unit based on parity of the processed power-on identification numbers.

The power-on identification number acquiring module 200 includes:
a bus acquiring sub-module configured to acquire the first power-on identification number and the second power-on identification number through a MVB connected to the first control unit and the second control unit.

Further, the power-on identification number acquiring module 200 may further include:
an Ethernet acquiring sub-module configured to acquire, if the second power-on identification number cannot be acquired through the MVB by the first control unit, the second power-on identification number through an Ethernet cable connecting the first control unit with the second control unit.

Based on the above technical solutions, the system for alternating between two control units of the train is provided according to the embodiment of the present disclosure. With the system, the two control units are started alternately each time the train is powered on and started, such that the two control units can be used alternately, thereby ensuring a balanced use, finding a control unit in a fault state in time, significantly improving a service life of the control unit, reducing a probability of faults in a standby control unit due to being unused for a long time, and thus improving safety of the train and riding experience of passengers.

Based on the above-described embodiments, a train is further provided according to the present disclosure, which includes a train body, control units and executing devices. The control unit applies the alternating method described above. The same beneficial effects are achieved, and details are not described herein.

The embodiments of the present disclosure are described in a progressive manner, and each embodiment places emphasis on the difference from other embodiments. Therefore, for the same or similar parts between the embodiments, one may refer to the description of other embodiments. For the device according to the embodiments, the device corresponds to the method according to the embodiments. Therefore, the description thereof is simple, and for the related parts, one may refer to the description of the method embodiments.

Those skilled in the art may further realize that the units and algorithm steps of the examples described in combination with the embodiments disclosed herein can be implemented by electronic hardware, computer software, or a combination thereof. To clearly describe interchangeability of hardware and software, the composition and steps of each example have been generally described in terms of their functionality in the above description. Whether these functions being implemented by hardware or software depends on the specific application and design constraints of the technical solutions.

The principle and embodiments of the present disclosure are described through specific examples herein. The description of the above-described embodiments is merely used to facilitate understanding the method and core idea of the present disclosure. The scope of the invention is defined by the appended claims.

It should be noted that a relation term such as "first" and "second" herein is only used to distinguish one entity or operation from another entity or operation, and does not necessarily require or imply that there is an actual relation or sequence among these entities or operations. Additionally, terms such as "include", "comprise" or any other variant are intended to cover a non-exclusive inclusion, so that a process, a method, an object or a device including a series of factors not only includes the series of factors, but also includes other factors not explicitly listed, or also includes inherent factors in the process, the method, the object or the device. Without more limitation, a factor defined by a sentence "include one ..." does not exclude that another same factor exists in the process, the method, the object, or the device including the described factor.

## Claims

1. A method for alternating between two control units of a train, comprising:
recording (S101) power-on identification numbers of a first control unit and a second control unit of the train, wherein the first control unit is a control unit started in a case that the power-on identification numbers are odd, and the second control unit is a control unit started in a case that the power-on identification numbers are even;
acquiring (S102, S201) a first power-on identification number of the first control unit and a second power-on identification number of the second control unit when the train is started;
determining (S103, S202) whether the first power-on identification number is equal to the second power-on identification number;
adding (S104, S204), if the first power-on identification number is equal to the second power-on identification number, an odd number to both the first power-on identification number and the second power-on identification number to obtain new power-on identification numbers, and starting a corresponding control unit based on parity of the new power-on identification numbers;
determining (S203), if the first power-on identification number is not equal to the second power-on identification number, whether an absolute value of a difference between the first power-on identification number and the second power-on identification number is 1, wherein the first power-on identification number being not equal to the second power-on identification number indicates that one of the first control unit and the second control unit is a newly installed control unit;
adding (S205), if the absolute value of the difference is 1, 1 to a smaller one of the first power-on identification number and the second power-on identification number, and starting a control unit of which the power-on identification number is added with 1;
obtaining (S206), if the absolute value of the difference is not 1, a creditable power-on identification number which corresponds to either one of a larger one, a smaller one or an average of the first power-on identification number and the second power-on identification number;
synchronizing (S207) the first power-on identification number and the second power-on identification number with the creditable power-on identification number to obtain equal synchronized power-on identification numbers; and
adding (S208) 1 to the synchronized power-on identification numbers to obtain processed power-on identification numbers, and starting a corresponding control unit based on parity of the processed power-on identification numbers.

2. The method for alternating between two control units of a train according to claim 1, wherein the acquiring the first power-on identification number of the first control unit and the second power-on identification number of the second control unit comprises:
acquiring (S301) the first power-on identification number and the second power-on identification number through a MVB connected to the first control unit and the second control unit.

3. The method for alternating between two control units of a train according to claim 2, further comprising:
acquiring (S302), if the second power-on identification number is not capable of being acquired through the MVB by the first control unit, the second power-on identification number through an Ethernet cable connecting the first control unit with the second control unit.

4. A system for alternating between two control units of a train, comprising:
a recording module (100) configured to record power-on identification numbers of a first control unit and a second control unit of the train, wherein the first control unit is a control unit started in a case that the power-on identification numbers are odd, and the second control unit is a control unit started in a case that the power-on identification numbers are even;
a power-on identification number acquiring module (200) configured to acquire a first power-on identification number of the first control unit and a second power-on identification number of the second control unit when the train is started;
a determining module (300) configured to determine whether the first power-on identification number is equal to the second power-on identification number;
an executing module (400) configured to add, if the first power-on identification number is equal to the second power-on identification number, an odd number to both the first power-on identification number and the second power-on identification number to obtain new power-on identification numbers, and start a corresponding control unit based on parity of the new power-on identification numbers;
a difference determining module configured to determine, if the first power-on identification number is not equal to the second power-on identification number, whether an absolute value of a difference between the first power-on identification number and the second power-on identification number is 1, wherein the first power-on identification number being not equal to the second power-on identification number indicates that one of the first control unit and the second control unit is a newly installed control unit;
a processing module configured to add, if the absolute value of the difference is 1, 1 to a smaller one of the first power-on identification number and the second power-on identification number, and start a control unit of which the power-on identification number is added with 1;
a larger number acquiring module configured to acquire, if the absolute value of the difference is not 1, a creditable power-on identification number which corresponds to either one of a larger one, a smaller one or an average of the first power-on identification number and the second power-on identification number;
a number synchronizing module configured to synchronize the first power-on identification number and the second power-on identification number with the creditable power-on identification number to obtain equal synchronized power-on identification numbers;
an adding module configured to add 1 to the synchronized power-on identification numbers to obtain processed power-on identification numbers; and
a start controlling module configured to start a corresponding control unit based on parity of the processed power-on identification numbers.

5. The system for alternating between two control units of a train according to claim 4, wherein the power-on identification number acquiring module comprises:
a bus acquiring sub-module configured to acquire the first power-on identification number and the second power-on identification number through a MVB connected to the first control unit and the second control unit.

6. The system for alternating between two control units of a train according to claim 5, wherein the power-on identification number acquiring module further comprises:
an Ethernet acquiring sub-module configured to acquire, if the second power-on identification number is not capable of being acquired through the MVB by the first control unit, the second power-on identification number through an Ethernet cable connecting the first control unit with the second control unit.

7. A train, comprising a train body and the system for alternating between two control units of said train according to any one of claims 4 to 6.

## Patentansprüche

1. Verfahren zum abwechselnden Betrieb zweier Steuereinheiten eines Zuges, umfassend:
Aufzeichnen (S101) von Einschalt-Identifikationsnummern einer ersten Steuereinheit und einer zweiten Steuereinheit des Zuges, wobei die erste Steuereinheit eine Steuereinheit ist, die in dem Fall gestartet wird, dass die Einschalt-Identifikationsnummern ungerade sind, und die zweite Steuereinheit eine Steuereinheit ist, die in dem Fall gestartet wird, dass die Einschalt-Identifikationsnummern gerade sind;
Erfassen (S102, S201) einer ersten Einschalt-Identifikationsnummer der ersten Steuereinheit und einer zweiten Einschalt-Identifikationsnummer der zweiten Steuereinheit, wenn der Zug gestartet wird;
Bestimmen (S103, S202), ob die erste Einschalt-Identifikationsnummer gleich oder ungleich der zweiten Einschalt-Identifikationsnummer ist;
Addieren (S104, S204), wenn die erste Einschalt-Identifikationsnummer gleich der zweiten Einschalt-Identifikationsnummer ist, einer ungeraden Zahl sowohl zu der ersten Einschalt-Identifikationsnummer als auch zu der zweiten Einschalt-Identifikationsnummer, um neue Einschalt-Identifikationsnummern zu erhalten, und Starten einer entsprechenden Steuereinheit auf der Grundlage von Parität der neuen Einschalt-Identifikationsnummern;
Bestimmen (S203), ob die erste Einschalt-Identifikationsnummer nicht gleich der zweiten Einschalt-Identifikationsnummer ist, ob ein Betrag einer Differenz zwischen der ersten Einschalt-Identifikationsnummer und der zweiten Einschalt-Identifikationsnummer 1 ist oder nicht, wobei die Tatsache, dass die erste Einschalt-Identifikationsnummer nicht gleich der zweiten Einschalt-Identifikationsnummer ist, angibt, dass die erste Steuereinheit oder die zweite Steuereinheit eine neu installierte Steuereinheit ist;
Addieren (S205), Falls der Betrag der Differenz 1 ist, der Zahl 1 zu einer kleineren der ersten Einschalt-Identifikationsnummer und der zweiten Einschalt-Identifikationsnummer, und Starten einer Steuereinheit, deren Einschalt-Identifikationsnummer um die Zahl 1 addiert wird;
Erhalten (S206), wenn der Betrag der Differenz ungleich 1 ist, einer glaubwürdigen Einschalt-Identifikationsnummer, die einer größeren Nummer oder einer kleineren Nummer oder einem Mittelwert der ersten Einschalt-Identifikationsnummer und der zweiten Einschalt-Identifikationsnummer entspricht;
Synchronisieren (S207) der ersten Einschalt-Identifikationsnummer und der zweiten Einschalt-Identifikationsnummer mit der glaubwürdigen Einschalt-Identifikationsnummer, um gleiche synchronisierte Einschalt-Identifikationsnummern zu erhalten; und
Addieren (S208) der Zahl 1 zu den synchronisierten Einschalt-Identifikationsnummern, um verarbeitete Einschalt-Identifikationsnummern zu erhalten, und Starten einer entsprechenden Steuereinheit auf der Grundlage der Parität der verarbeiteten Einschalt-Identifikationsnummern.

2. Verfahren zum abwechselnden Betrieb zweier Steuereinheiten eines Zuges nach Anspruch 1, wobei die Erfassung der ersten Einschalt-Identifikationsnummer der ersten Steuereinheit und der zweiten Einschalt-Identifikationsnummer der zweiten Steuereinheit umfasst:
Erfassen (S301) der ersten Einschalt-Identifikationsnummer und der zweiten Einschalt-Identifikationsnummer über eine MVB, die mit der ersten Steuereinheit und der zweiten Steuereinheit verbunden ist.

3. Verfahren zum abwechselnden Betrieb von zwei Steuereinheiten eines Zugs nach Anspruch 2, ferner umfassend:
Erfassen (S302), ob die zweite Einschalt-Identifikationsnummer nicht über die MVB durch die erste Steuereinheit erfasst werden kann, der zweiten Einschalt-Identifikationsnummer über ein Ethernet-Kabel, das die erste Steuereinheit mit der zweiten Steuereinheit verbindet.

4. System zum Wechseln zwischen zwei Steuereinheiten eines Zuges, aufweisend:
ein Aufzeichnungsmodul (100), das konfiguriert ist, Einschalt-Identifikationsnummern einer ersten Steuereinheit und einer zweiten Steuereinheit des Zuges aufzuzeichnen, wobei die erste Steuereinheit eine Steuereinheit ist, die für den Fall gestartet wird, dass die Einschalt-Identifikationsnummern ungerade sind, und die zweite Steuereinheit eine Steuereinheit ist, die für den Fall gestartet wird, dass die Einschalt-Identifikationsnummern gerade sind;
ein Modul (200) zum Erfassen von Einschalt-Identifikationsnummern, das konfiguriert ist, eine erste Einschalt-Identifikationsnummer der ersten Steuereinheit und eine zweite Einschalt-Identifikationsnummer der zweiten Steuereinheit zu erfassen, wenn der Zug gestartet wird;
ein Bestimmungsmodul (300), das konfiguriert ist, zu bestimmen, ob die erste Einschalt-Identifikationsnummer gleich oder ungleich der zweiten Einschalt-Identifikationsnummer ist;
ein Ausführungsmodul (400), das konfiguriert ist, falls die erste Einschalt-Identifikationsnummer gleich der zweiten Einschalt-Identifikationsnummer ist, eine ungerade Zahl sowohl zu der ersten Einschalt-Identifikationsnummer als auch zu der zweiten Einschalt-Identifikationsnummer zu addieren, um neue Einschalt-Identifikationsnummern zu erhalten, und eine entsprechende Steuereinheit auf der Grundlage von Parität der neuen Einschalt-Identifikationsnummern zu starten;
ein Differenzbestimmungsmodul, das eingerichtet ist, um, falls die erste Einschalt-Identifikationsnummer nicht gleich der zweiten Einschalt-Identifikationsnummer ist, zu bestimmen, ob ein Betrag einer Differenz zwischen der ersten Einschalt-Identifikationsnummer und der zweiten Einschalt-Identifikationsnummer gleich 1 ist, wobei die Tatsache, dass die erste Einschalt-Identifikationsnummer nicht gleich der zweiten Einschalt-Identifikationsnummer ist, angibt, dass die erste Steuereinheit oder die zweite Steuereinheit eine neu installierte Steuereinheit ist;
ein Verarbeitungsmodul, das eingerichtet ist, dass es, wenn der Betrag der Differenz gleich 1 ist, die Zahl 1 zu einer kleineren der ersten Einschalt-Identifikationsnummer und der zweiten Einschalt-Identifikationsnummer addiert und eine Steuereinheit startet, deren Einschalt-Identifikationsnummer mit der Zahl 1 addiert wird;
ein Modul zur Erfassung einer größeren Nummer, das derart eingerichtet ist, dass es, wenn der Betrag der Differenz ungleich 1 ist, eine glaubwürdige Einschalt-Identifikationsnummer erfasst, die einer größeren Nummer oder einer kleineren Nummer oder einem Durchschnitt der ersten Einschalt-Identifikationsnummer und der zweiten Einschalt-Identifikationsnummer entspricht;
ein Nummernsynchronisationsmodul, das konfiguriert ist, die erste Einschalt-Identifikationsnummer und die zweite Einschalt-Identifikationsnummer mit der glaubwürdigen Einschalt-Identifikationsnummer zu synchronisieren, um gleiche synchronisierte Einschalt-Identifikationsnummern zu erhalten;
ein Additionsmodul, das konfiguriert ist, die Zahl 1 zu den synchronisierten Einschalt-Identifikationsnummern zu addieren, um verarbeitete Einschalt-Identifikationsnummern zu erhalten; und
ein Startsteuermodul, das konfiguriert ist, eine entsprechende Steuereinheit auf der Grundlage der Parität der verarbeiteten Einschalt-Identifikationsnummern zu starten.

5. System zum abwechselnden Betrieb zweier Steuereinheiten eines Zugs nach Anspruch 4, wobei das Modul zur Erfassung von Einschalt-Identifikationsnummern aufweist:
ein Bus-Erfassungs-Submodul, das konfiguriert ist, die erste Einschalt-Identifikationsnummer und die zweite Einschalt-Identifikationsnummer über eine MVB zu erfassen, die mit der ersten Steuereinheit und der zweiten Steuereinheit verbunden ist.

6. System zum abwechselnden Betrieb von zwei Steuereinheiten eines Zugs nach Anspruch 5, wobei das Modul zum Erfassen von Einschalt-Identifikationsnummern ferner aufweist:
ein Ethernet-Erfassungs-Submodul, das konfiguriert ist, falls die zweite Einschalt-Identifikationsnummer nicht über die MVB von der ersten Steuereinheit erfasst werden kann, die zweite Einschalt-Identifikationsnummer über ein Ethernet-Kabel zu erfassen, das die erste Steuereinheit mit der zweiten Steuereinheit verbindet.

7. Zug, aufweisend einen Zugkörper und das System zum abwechselnden Betrieb zwischen zwei Steuereinheiten des Zugs nach einem der Ansprüche 4 bis 6.

## Revendications

1. Procédé permettant d'alterner deux unités de commande d'un train, le procédé comprenant :
l'enregistrement (S101) de numéros d'identification de mise sous tension d'une première unité de commande et d'une seconde unité de commande du train, la première unité de commande étant une unité de commande démarrée au cas où les numéros d'identification de mise sous tension seraient impairs, et la seconde unité de commande étant une unité de commande démarrée au cas où les numéros d'identification de mise sous tension seraient pairs ;
l'acquisition (S102, S201) d'un premier numéro d'identification de mise sous tension de la première unité de commande et d'un second numéro d'identification de mise sous tension de la seconde unité de commande lorsque le train est démarré ;
la détermination (S103, S202) quant à savoir si le premier numéro d'identification de mise sous tension est égal ou non au second numéro d'identification de mise sous tension ;
l'addition (S104, S204), si le premier numéro d'identification de mise sous tension est égal au second numéro d'identification de mise sous tension, d'un nombre impair à la fois au premier numéro d'identification de mise sous tension et au second numéro d'identification de mise sous tension, afin d'obtenir de nouveaux numéros d'identification de mise sous tension, et le démarrage d'une unité de commande correspondante sur la base de la parité des nouveaux numéros d'identification de mise sous tension ;
la détermination (S203), si le premier numéro d'identification de mise sous tension n'est pas égal au second numéro d'identification de mise sous tension, quant à savoir si une valeur absolue d'une différence entre le premier numéro d'identification de mise sous tension et le second numéro d'identification de mise sous tension est ou non 1, où le fait que le premier numéro d'identification de mise sous tension ne soit pas égal au second numéro d'identification de mise sous tension indique qu'une unité, parmi la première unité de commande et la seconde unité de commande, est une unité de commande récemment installée ;
l'addition (S205), si la valeur absolue de la différence est 1, du nombre 1 à un numéro plus petit parmi le premier numéro d'identification de mise sous tension et le second numéro d'identification de mise sous tension, et le démarrage d'une unité de commande dont le numéro d'identification de mise sous tension est additionné du nombre 1 ;
l'obtention (S206), si la valeur absolue de la différence n'est pas 1, d'un numéro d'identification de mise sous tension crédible qui correspond à un numéro plus grand, ou à un numéro plus petit, ou à une moyenne du premier numéro d'identification de mise sous tension et du second numéro d'identification de mise sous tension ;
la synchronisation (S207) du premier numéro d'identification de mise sous tension et du second numéro d'identification de mise sous tension avec le numéro d'identification de mise sous tension crédible, afin d'obtenir des numéros d'identification de mise sous tension synchronisés égaux ; et
l'addition (S208) du nombre 1 aux numéros d'identification de mise sous tension synchronisés, afin d'obtenir des numéros d'identification de mise sous tension traités, et le démarrage d'une unité de commande correspondante sur la base de la parité des numéros d'identification de mise sous tension traités.

2. Le procédé permettant d'alterner deux unités de commande d'un train selon la revendication 1, dans lequel l'acquisition du premier numéro d'identification de mise sous tension de la première unité de commande et du second numéro d'identification de mise sous tension de la seconde unité de commande comprend :
l'acquisition (S301) du premier numéro d'identification de mise sous tension et du second numéro d'identification de mise sous tension par l'intermédiaire d'une MVB connectée à la première unité de commande et à la seconde unité de commande.

3. Le procédé permettant d'alterner deux unités de commande d'un train selon la revendication 2, comprenant en outre :
l'acquisition (S302), si le second numéro d'identification de mise sous tension ne peut pas être acquis par l'intermédiaire de la MVB par la première unité de commande, du second numéro d'identification de mise sous tension par l'intermédiaire d'un câble Ethernet connectant la première unité de commande à la seconde unité de commande.

4. Système permettant d'alterner deux unités de commande d'un train, le système comprenant :
un module d'enregistrement (100) conçu pour enregistrer des numéros d'identification de mise sous tension d'une première unité de commande et d'une seconde unité de commande du train, la première unité de commande étant une unité de commande démarrée au cas où les numéros d'identification de mise sous tension seraient impairs, et la seconde unité de commande étant une unité de commande démarrée au cas où les numéros d'identification de mise sous tension seraient pairs ;
un module (200) d'acquisition de numéros d'identification de mise sous tension conçu pour acquérir un premier numéro d'identification de mise sous tension de la première unité de commande et un second numéro d'identification de mise sous tension de la seconde unité de commande lorsque le train est démarré ;
un module de détermination (300) conçu pour déterminer si le premier numéro d'identification de mise sous tension est égal ou non au second numéro d'identification de mise sous tension ;
un module d'exécution (400) conçu pour additionner, si le premier numéro d'identification de mise sous tension est égal au second numéro d'identification de mise sous tension, un nombre impair à la fois au premier numéro d'identification de mise sous tension et au second numéro d'identification de mise sous tension, afin d'obtenir de nouveaux numéros d'identification de mise sous tension, et pour démarrer une unité de commande correspondante sur la base de la parité des nouveaux numéros d'identification de mise sous tension ;
un module de détermination de différence conçu pour déterminer, si le premier numéro d'identification de mise sous tension n'est pas égal au second numéro d'identification de mise sous tension, si une valeur absolue d'une différence entre le premier numéro d'identification de mise sous tension et le second numéro d'identification de mise sous tension est 1, où le fait que le premier numéro d'identification de mise sous tension ne soit pas égal au second numéro d'identification de mise sous tension indique qu'une unité, parmi la première unité de commande et la seconde unité de commande, est une unité de commande récemment installée ;
un module de traitement conçu pour additionner, si la valeur absolue de la différence est 1, le nombre 1 à un numéro plus petit parmi le premier numéro d'identification de mise sous tension et le second numéro d'identification de mise sous tension, et pour démarrer une unité de commande dont le numéro d'identification de mise sous tension est additionné du nombre 1 ;
un module d'acquisition de numéro plus grand conçu pour acquérir, si la valeur absolue de la différence n'est pas 1, un numéro d'identification de mise sous tension crédible qui correspond à un numéro plus grand, ou à un numéro plus petit, ou à une moyenne du premier numéro d'identification de mise sous tension et du second numéro d'identification de mise sous tension ;
un module de synchronisation de numéros conçu pour synchroniser le premier numéro d'identification de mise sous tension et le second numéro d'identification de mise sous tension avec le numéro d'identification de mise sous tension crédible, afin d'obtenir des numéros d'identification de mise sous tension synchronisés égaux ;
un module d'addition conçu pour additionner le nombre 1 aux numéros d'identification de mise sous tension synchronisés, afin d'obtenir des numéros d'identification de mise sous tension traités; et
un module de commande de démarrage conçu pour démarrer une unité de commande correspondante sur la base de la parité des numéros d'identification de mise sous tension traités.

5. Le système permettant d'alterner deux unités de commande d'un train selon la revendication 4, dans lequel le module d'acquisition de numéros d'identification de mise sous tension comprend :
un sous-module d'acquisition par barre omnibus conçu pour acquérir le premier numéro d'identification de mise sous tension et le second numéro d'identification de mise sous tension par l'intermédiaire d'une MVB connectée à la première unité de commande et à la seconde unité de commande.

6. Le système permettant d'alterner deux unités de commande d'un train selon la revendication 5, dans lequel le module d'acquisition de numéros d'identification de mise sous tension comprend en outre :
un sous-module d'acquisition par Ethernet conçu pour acquérir, si le second numéro d'identification de mise sous tension ne peut pas être acquis par l'intermédiaire de la MVB par la première unité de commande, le second numéro d'identification de mise sous tension par l'intermédiaire d'un câble Ethernet connectant la première unité de commande à la seconde unité de commande.

7. Train comprenant un corps de train et le système permettant d'alterner deux unités de commande dudit train selon l'une quelconque des revendications 4 à 6.
